# EUROPÄISCHE PATENTSCHRIFT

(11) **EP 0 385 229 B1**
(45) Veröffentlichungstag und Bekanntmachung des Hinweises auf die Patenterteilung: **13.01.1993**
(21) Anmeldenummer: 90103197.1
(22) Anmeldetag: 20.02.1990
(51) Int. Cl.: B62D 25/08

(54) **Kraftwagen**
Motor vehicle
Automobile

(30) Priorität: 01.03.1989 DE 8902413 U
(43) Veröffentlichungstag der Anmeldung: 05.09.1990
(73) Patentinhaber: RAPPOLD GmbH & CO. KG KAROSSERIE-UND FAHRZEUGBAU, D-42489 Wülfrath (DE)
(72) Erfinder: Rappold, Ingo, Dipl.-Ing, D-4020 Mettmann (DE)
(74) Vertreter: Sturies, Herbert

(56) Entgegenhaltungen:
- DE-A- 2 936 307
- DE-A- 3 025 145
- FR-A- 2 587 941

## Beschreibung

Die Erfindung bezieht sich auf einen Kraftwagen, insbesondere Bestattungswagen, mit einem verlängerten Laderaum, dessen heckseitige Öffnung von einer herunterklappbaren, auf eine Abdichtungsleiste der Laderaumöffnung gedrückten Heckklappe verschließbar ist und dessen Boden auf einem heckseitigen, einen Bestandteil der Karosserie bildenden Querträger aufliegt.

Für viele Zwecke sind die Ladelängen von Kraftwagen zu kurz. Beispielsweise können übliche Kombi-Fahrzeuge bzw. Lieferwagen häufig nicht als Bestattungswagen oder Krankenwagen eingesetzt werden, weil der Laderaum zu kurz ist. Bei Bestattungswagen sollte die Ladelänge hinter der Trennwand ca. 2100 bis 2150 mm betragen. Die gebräuchlichen Ladelängen bei großen PKW-Kombi-Fahrzeugen liegen jedoch nur bei 1800 bis 1900 mm. Um bei solchen Fahrzeugen eine Verlängerung der Ladelänge zu erreichen, ist es bekannt, die Karosserie dieser Fahrzeuge hinter der Hinterachse auseinanderzutrennen und Zwischenstücke der gewünschten Länge aus Blech oder Kunststoff dazwischenzusetzen und einzuschweißen oder einzukleben bzw. sonstwie zu befestigen. Dabei müssen Dach, Seitenwände und Boden jeweils separat verlängert werden, was einen erheblichen Aufwand bedeutet.

Außerdem ist es bekannt, die Ladelänge dadurch zu vergrößern, daß nur die Heckklappe oder auch nur die Heckscheibe rucksackartig ausgebuchtet wird. Ein derartiges Vorgehen hat jedoch den Nachteil, daß der Iadeboden nicht verlängert wird und eine Belastung der Heckklappe aus konstruktiven Gründen ausscheidet. Auf diese Weise umgebaute Fahrzeuge sind daher für viele Einsatzzwecke nicht ausreichend.

Demgegenüber liegt der Erfindung die Aufgabe zugrunde, einen Kraftwagen der eingangs genannten Art so zu verbessern, daß eine Verlängerung der Ladelänge einschließlich Verlängerung der Ladefläche mit einfachen Mitteln erreicht wird.

Diese Aufgabe wird dadurch gelöst, daß an dem originalen Querträger mit Abstand ein im wesentlichen identischer zusätzlicher Querträger auf gleichem Niveau befestigt ist, der einen Zusatzboden mit horizontalen Abdichtungsleisten aufweist, und daß die Heckklappe klappgelenkseitig verlängert und innen mit bis an die originale Abdichtungsleiste der Laderaumöffnung vorspringenden Abdichtungsfalzstegen versehen ist.

Für die Erfindung ist von grundsätzlicher Bedeutung, daß außer einer abgeänderten Heckklappe im wesentlichen nur ein zusätzlicher Querträger mit einigen zusätzlichen Blendteilen erforderlich ist. Die Karosserie bleibt praktisch ungeändert, wenn von wenigen geringfügigen Eingriffen abgesehen wird. Insbesondere ist die Heckklappe so ausgebildet, daß die obere und die seitlichen Abdichtungsleisten der Laderaumöffnung ungeändert benutzt werden können

Die Umrüstung eines Kraftwagens erfolgt mit vorgefertigten Bauteilen, die einen Bausatz bilden. Es ist daher möglich, die Bauteile dieses Bausatzes von Nichtfachleuten anbringen zu lassen. Die Entfernung der Bausatzteile ist ebenso einfach möglich. Infolgedessen kann der Wagen bei Bedarf auch wieder rückgerüstet werden. Soll der umgerüstete Wagen außer Betrieb genommen werden, so können seine Bausatzbauteile abgebaut und zum Umrüsten eines anderen Wagens benutzt werden.

Der Anbau und auch der Abbau wird dadurch erleichtert, daß der zusätzliche Querträger mit mehreren Abstandhaltern versehen ist, die an dem originalen Querträger lösbar befestigt sind.

Besonders vorteilhaft ist es, den Wagen so auszubilden, daß der Zusatzoden ein Bodenverlängerungsblech hat, das über dem originalen Querträger bis zu einem vom Laderaumboden abgetrennten, dem zusätzlichen Querträger zugeordneten Bodenstück angeordnet ist. Diese Ausgestaltung hat den Vorteil, daß das Wagenheck im Außenabschlußbereich ungeändert bleibt. Es ist also nicht nötig, Umbauten oder Nachbesserungen vorzunehmen, beispielsweise ein Abschrauben und Neumontieren des Bodenstücks und der benachbarten Klappendichtung.

Der Zusatzboden weist beidseitig des abgetrennten Bodenstücks und der zugehörigen horizontalen Abdichtungsleisten je ein Bodenblech auf. Diese Bodenbleche decken Vertiefungen zwischen dem zusätzlichen Querträger und der originalen Karosserie ab.

Um den originalen Stoßfänger weiter verwenden zu können, ist der Wagen so ausgebildet, daß der originale Stoßfänger an dem zusätzlichen Querträger und mit seitlich zum Fahrzeugbug vorspringenden Seitenteilen an der Karosserie befestigt ist, und daß beidseitig Stoßfängeransatzstücke an der Karosserie und/oder an dem Stoßfänger befestigt sind. Die Stoßfängeransatzstücke sind so gestaltet, daß die Gestaltung der Karosserie durch Versetzen der Stoßfänger nach hinten nicht gestört wird.

Eine weitere Ausgestaltung des Wagens zum Abschluß des oberhalb der Bodenbleche und dem Wagenheck gelegenen Raums wird dadurch erreicht, daß die Heckklappe seitlich und in Verlängerung des Daches vorspringende, die Abdichtungsfalzstege seitlich abdeckende und bündig an die Seiten der Karosserie anschließende Seitenwangen aufweist. Insbesondere läßt sich dadurch eine optische Anpassung erzielen, die den Wagen von hinten so aussehen läßt, als läge keine abgeänderte Karosserie vor.

Bei einem Wagen mit beidseitig am Heck vorhandenen Schlußleuchten ist die Heckklappe die Schlußleuchten freilassend ausgebildet. Es ist dies die einfachste konstruktive Möglichkeit, die originale Heckbeleuchtung ungeändert zu übernehmen, um die Beleuchtungsvorschriften zu erfüllen. Diese konstruktive Ausgestaltung ist jedoch optisch nicht ansprechend, weil die Heckklappe über die Ebene der beiden Schlußleuchten vorspringt. Es ist daher bei einem Wagen mit beidseitig am Heck vorhandenen Schlußleuchten besonders vorteilhaft, daß in die Heckklappe Schlußleuchten eingebaut sind, und daß die originalen Schlußleuchten durch seitlich nicht abstrahlende Heckleuchten ersetzt oder von der Heckklappe und zusätzlich an der Heckklappe oder direkt am Wagen befestigten Abdeckkappen abgedeckt sind. Die in die Heckklappe eingebauten Schlußleuchten komplettieren die Rückansicht des Wagens, so daß dieser von hinten aussieht, als wenn der Umbau nicht vorhanden wäre. Die an die Stelle der Originalschlußleuchten eingesetzten Heckleuchten oder die von der Heckklappe und den Abdeckkappen abgedeckten originalen Schlußleuchten lassen bei hochgeklappter Heckklappe eine vorschriftsmäßige Beleuchtung des Wagens zu.

Die Erfindung wird anhand eines in der Zeichnung dargestellten Ausführungsbeispiels näher erläutert. Es zeigt:
Fig.1 eine perspektivische Ansicht des Hecks einer Wagenkarosserie,
Fig.2 die Ansicht A der Fig.1 in perspektivischer Darstellung,
Fig.3 eine Seitenansicht des Hecks des umgerüsteten Wagens, und
Fig.4 eine Aufsicht auf das Wagenheck ohne Heckklappe.

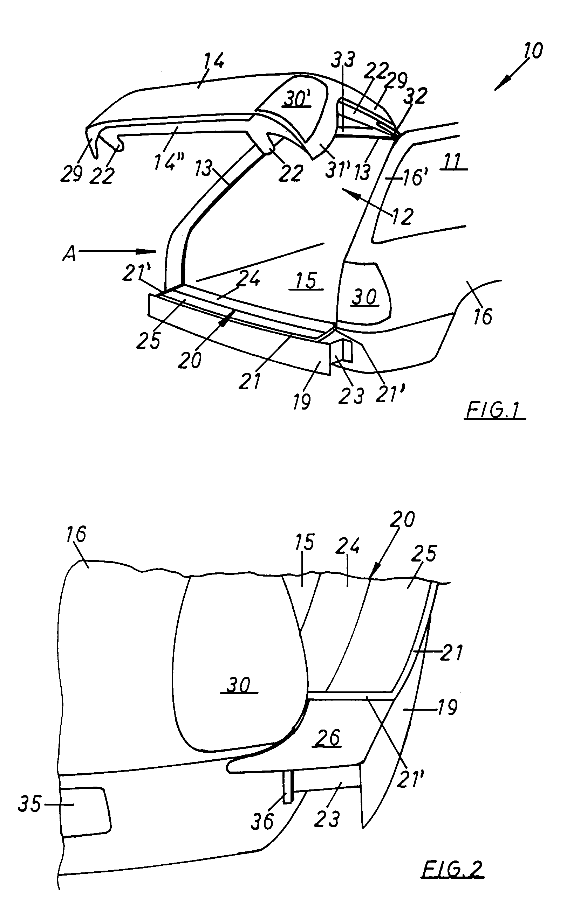

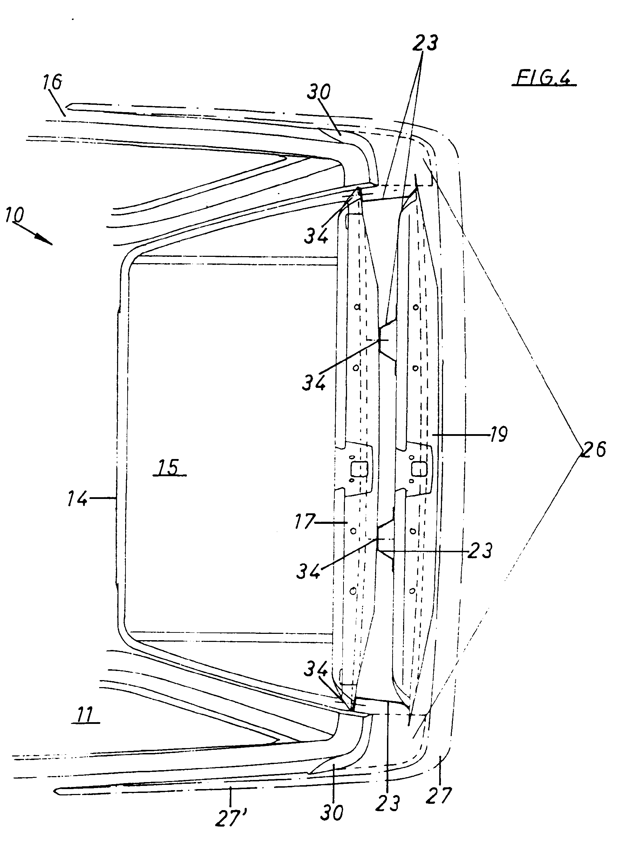

Der Wagen 10 ist ein umgerüstetes PKW-Kombi-Fahrzeug, dessen Umrüstung sich auf den Heckbereich beschränkt. Es wurde infolgedessen nur der Heckbereich der Karosserie 16 dargestellt. Die Karosserie 16 umschließt den Laderaum 11 und hat eine heckseitige Öffnung 12, die von einer Heckklappe 14 verschließbar ist. Die Heckklappe 14 ist mit Scharnieren 32 an der oberen hinteren Dachkante der Karosserie 16 klappbeweglich befestigt. Fig.1 zeigt die teilweise hochgeklappte Heckklappe 14 und Fig.3 zeigt die Heckklappe 14 bei verschlossener Öffnung 12. Die Laderaumöffnung 12 muß abgedichtet werden und hat dazu Abdichtungsleisten 13, die im Bereich des Daches und der vertikalen Karosserieteile original sind.

Der Laderaum 11 hat einen Laderaumboden 15, der in Fig.3 nur schematisch angedeutet ist und sich ohne Abstufung nach unten oder nach oben bis auf die Höhe eines Stoßfängers 27 erstreckt, der die Karosserie 16 hinten quer und seitlich mit Seitenteilen 27′ umgreift.

Der Laderaumboden 15 hat einen ihn rückwärtig verlängernden Zusatzboden 20, der horizontale Abdichtungsleisten 21, 21′ aufweist. Die horizontale, quer zur Karosserie gerichtete Abdichtungsleiste 21 ist aus dem Bereich zwischen zwei heckseitigen Schlußleuchten 30 herausgenommen und entsprechend dem Überstand des Zusatzbodens 20 nach hinten versetzt angeordnet. Zwischen ihr und den vertikalen Abdichtungsleisten 13 finden sich die horizontalen, zwischengesetzten Abdichtungsleisten 21′.

Die Heckklappe 14 ist so gestaltet, daß sie die Laderaumöffnung 12 abdichtend auf den Abdichtungsleisten 13,21,21′ aufliegt. Hierzu ist sie gemäß Fig.1,3 umgebaut. Sie ist zunächst klappgelenkseitig verlängert. Es ist ein Klappenstück 14′ vorgesehen, welches rückwärtig so weit vorspringt, daß die Heckklappe 14 aus ihrer ursprünglichen Lage auf den Abdichtungsleisten 13 in die in Fig.3 dargestellte Lage versetzt ist, in der sie einen Abstand z.B. 150 zur ursprünglichen Lage hat. Klappeninnenseitig sind zur Laderaumöffnung 12 vorspringende Abdichtungsfalzstege 22 vorhanden, die auf den originalen Abdichtungsleisten 13 aufliegen und gemeinsam mit dem Verlängerungsblech 14′ eine obere und seitliche Abdichtung der Laderaumöffnung bilden. Die untere Abdichtung auf den horizontalen Abdichtungsleisten 21,21′ wird durch die Unterkante 14˝ der Heckklappe 14 und die Unterseiten der Abdichtungsfalzstege 22 bewirkt, die auf den genannten Abdichtungsleisten 21,21′ aufliegen, wenn die Heckklappe 14 geschlossen ist.

Damit der Laderaumboden 15 im Bereich seines Zusatzbodens 20 belastbar ist, muß er abgestützt werden. Hierzu dient ein Querträger 19 unterhalb des Zusatzbodens 20. Dieser zusätzliche Querträger 19 ist auf gleichem Niveau eines originalen Querträgers 17 angeordnet, der als tragender Abschlußbestandteil der Karosserie 16 dient. Der Querträger 17 kann je nach Konstruktion des Wagens auch ein Abschlußblech oder ein sonstwie ausgebildetes tragendes Konstruktionselement der Wagenkarosserie 16 sein. Es ist besonders vorteilhaft, daß der zusätzliche Querträger 19 mit dem originalen Querträger 17 praktisch identisch ist, da auf diese Weise bewährte Konstruktionsteile zum Einsatz kommen.

Der zusätzliche Querträger 19 ist gemäß Fig.3 mit einem Abstand 18 vom originalen Querträger 17 entfernt angeordnet, so daß sich insgesamt eine Verlängerung von 150 ergibt, beispielsweise 150 mm. Die Befestigung des zusätzlichen Querträgers 19 am Querträger 17 erfolgt mit Abstandhaltern 23, die am Querträger 19 beispielsweise verschweißt sind. Die Befestigung der Abstandhalter 23 am originalen Querträger 17 erfolgt lösbar, z.B. mittels Verschraubung 34. Die hierzu erforderlichen Abstandhalter 23 sind wie dargestellt hut- oder winkelförmig.

Oberhalb des zusätzlichen Querträgers 19 ist der Zusatzboden 20 angeordnet, der zum einen aus einem vom Laderaumboden 15 abgetrennten Bodenstück 25 besteht. Der zwischen diesem Bodenstück 25 und dem Laderaumboden 15 bestehende Zwischenraum ist von einem Bodenverlängerungsblech 24 abgedeckt, beispielsweise einem Edelstahlblech, daß mit den beiden Querträgern 17, 19 verschraubt sein kann.

Der zusätzliche Querträger 19 erlaubt es infolge seiner dem originalen Querträger identischen Ausbildung, den Stoßfänger 27 an Originalbefestigungsbohrungen des neuen Querträgers 19 anzubringen. Es ist lediglich erforderlich, die seitlich in Richtung auf den Fahrzeugbug vorspringenden Seitenteile 27′ an der Karosserie 16 zu befestigen. Hierzu können ohnehin vorhandene Karosserieausnehmungen 35 benutzt werden, in welche Befestigungsstege eingesetzt werden, an denen die Seitenteile 27′ in üblicher Weise zu befestigen sind.

Da der Stoßfänger 27 nach hinten versetzt ist, müssen die infolgedessen freiwerdenden Teile der Karosserie 16 verkleidet werden, was durch Stoßfängeransatzstücke 28 geschieht, die an dem Stoßfänger 27 z.B. durch Verschrauben befestigt werden. An der Karosserie wird der seitliche Stoßfänger durch OriginalKlammern- oder Schiebeschuhe gehalten.

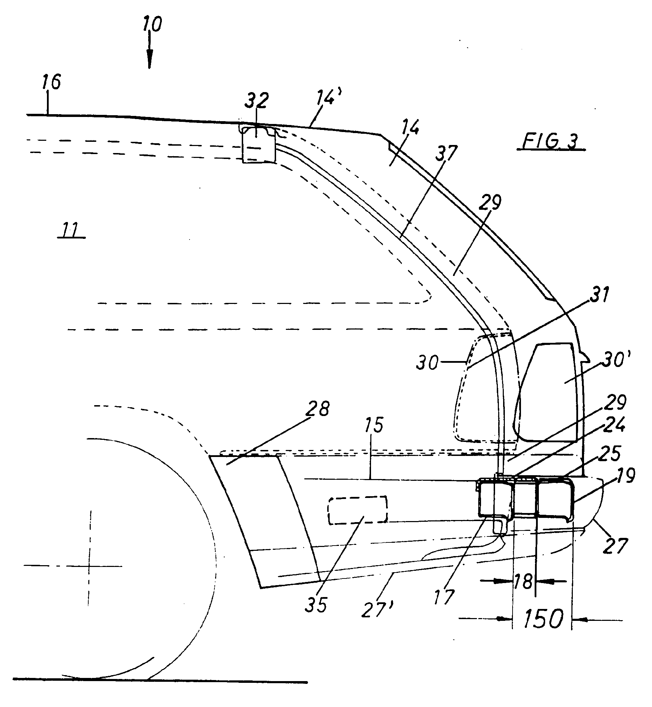

Aus Fig.2 ist ersichtlich, daß zwischen den Schlußleuchten 30 und dem zusätzlichen Querträger 19 auf jeder Seite ein Zwischenraum vorhanden ist, der durch ein Bodenblech 26 abgedeckt wird, welches Bestandteil des Zusatzbodens 20 ist. Die Befestigung eines Bodenblechs 26 erfolgt beispielsweise durch Aufstekken mit einer Gabel 36 auf einen Abstandhalter 23 und Befestigen am Bodenstück 25 und/oder am Bodenverlängerungsblech 24.

Der Raum oberhalb der Bodenbleche 26 kann aus optischen Gründen abgedeckt werden. Hierzu dienen die aus Fig.l ersichtlichen Seitenwangen 29, welche die Abdichtungsfalzstege 22 außen seitlich umgreifen und sich an die Seiten 16′ der Karosserie 16 anschmiegen. Der sich dadurch ergebende Karosseriespalt 37 kann bedarfsweise abgedichtet werden.

Die Fig.1 bis 3 zeigen eine Ausgestaltung des Wagenhecks, bei dem in die Heckklappe 14 Schlußleuchten 30′ eingebaut sind, die jeweils beispielsweise Schlußlicht, Bremslicht, Blinklicht usw. aufweisen. Es können dies die der Karosserie 16 entnommenen originalen Schlußleuchten 30 sein. In diesem Falle muß an die Stelle der originalen Schlußleuchten 30 eine seitlich nicht abstrahlende Heckleuchte eingesetzt werden, damit der Wagen bei hochgeklappter Heckklappe 14 ordnungsgemäß beleuchtet werden kann. In den Figuren wurde hingegen dargestellt, daß die originalen Schlußleuchten 30 in der Karosserie 16 belassen wurden, wozu es allerdings erforderlich ist, eine seitliche Abdeckung vorzusehen, soweit die umgebaute Heckklappe 14 nicht für eine seitliche Abdeckung sorgt. Für diese seitliche Abdeckung ist gemäß Fig.3 entweder eine zusätzliche Abdeckkappe 31 vorgesehen oder die ohnehin der Abdeckung der Schlußleuchten 3o dienenden Seitenwangen 29 besitzen angeformte Abdeckkappen 31′ gemäß Fig.1.

Auch als PKW-Limousinen-Fahrzeuge ausgebildete Kraftwagen können erfindungsgemäß umgerüstet werden, um den Koffer- bzw. Gepäckraum zu vergrößern bzw. zu verlängern. Die Verlängerung erfolgt in gleicher Weise durch Anbringung eines gleichartigen Abschlußträgers in der gewünschten Distanz und Verwendung eines neugefertigten Kofferraumdeckels, der den insassenseitigen sowie den linken und rechten Kofferklappenfalz ungeändert benutzt. Die hintere untere Anschlagkante des Kofferklappendekkels wird um den gewünschten Abstand versetzt und es werden die erforderlichen zusätzlichen seitlichen und bodenseitigen Abdichtungen vorgenommen. Auch hier kann der originale Stoßfänger an originalen Befestigungsstellen des zusätzlichen identischen Querträgers angebracht werden und auch eine Rückrüstung ist hier möglich.

Die Erfindung kann vorteilhaft auch bei Mehrzweckfahrzeugen eingesetzt werden, die dem Personen- und Güterverkehr dienen. Übliche Bezeichnungen dieser Fahrzeuge sind APV-(all purpose vehicle) oder VAN-Fahrzeuge.

## Patentansprüche

1. Kraftwagen (10), insbesondere Bestattungswagen, mit einem verlängerten Laderaum (11), dessen heckseitige Öffnung (12) von einer herunterklappbaren, auf eine Abdichtungsleiste (13) der Laderaumöffnung (12) gedrückten Heckklappe (14) verschließbar ist und dessen Boden (15) auf einem heckseitigen, einen Bestandteil der Karosserie (16) bildenden Querträger (17) aufliegt, **dadurch gekennzeichnet**, daß an dem originalen Querträger (17) mit Abstand (18) ein im wesentlichen identischer zusätzlicher Querträger (19) auf gleichem Niveau befestigt ist, der einen Zusatzboden (20) mit horizontalen Abdichtungsleisten (21) aufweist, und daß die Heckklappe (14) klappgelenkseitig verlängert und innen mit bis an die originale Abdichtungsleiste (13) der Laderaumöffnung (12) vorspringenden Abdichtungsfalzstegen (22) versehen ist.

2. Wagen nach Anspruch 1, **dadurch gekennzeichnet,** daß der zusätzliche Querträger (19) mit mehreren Abstandhaltern (23) versehen ist, die an dem originalen Querträger (17) lösbar befestigt sind.

3. Wagen nach Anspruch 1 oder 2, **dadurch gekennzeichnet**, daß der Zusatzboden (20) ein Bodenverlängerungsblech (24) hat, das über dem originalen Querträger (17) bis zu einem vom Laderaumboden (15) abgetrennten, dem zusätzlichen Querträger (19) zugeordneten Bodenstück (25) angeordnet ist.

4. Wagen nach Anspruch 3, **dadurch gekennzeichnet,** daß der Zusatzboden (20) beidseitig des abgetrennten Bodenstücks (25) und der zugehörigen horizontalen Abdichtungsleisten (21′) je ein Bodenblech (26) aufweist.

5. Wagen nach einem oder mehreren der Ansprüche 1 bis 4, **dadurch gekennzeichnet,** daß der originale Stoßfänger (27) an dem zusätzlichen Querträger (19) und mit seitlich zum Fahrzeugbug vorspringenden Seitenteilen (27′) an der Karosserie (16) befestigt ist, und daß beidseitig Stoßfängeransatzstücke (28) an der Karosserie (16) und/oder an dem Stoßfänger (27) befestigt sind.

6. Wagen nach einem oder mehreren der Ansprüche 1 bis 5, **dadurch gekennzeichnet**, daß die Heckklappe (14) seitlich und in Verlängerung des Daches vorspringende, die Abdichtungsfalzstege (22) seitlich abdeckende und bündig an die Seiten (16′) der Karosserie (16) anschließende Seitenwangen (29) aufweist.

7. Wagen nach einem oder mehreren der Ansprüche 1 bis 6, mit beidseitig am Heck vorhandenen Schlußleuchten, **dadurch gekennzeichnet**, daß die Heckklappe (14) die Schlußleuchten (30) freilassend ausgebildet ist.

8. Wagen nach einem oder mehreren der Ansprüche 1 bis 6, mit beidseitig am Heck vorhandenen Schlußleuchten, **dadurch gekennzeichnet**, daß in die Heckklappe (14) Schlußleuchten (30′) eingebaut sind, und daß die originalen Schlußleuchten (30) durch seitlich nicht abstrahlende Heckleuchten ersetzt oder von der Heckklappe (14) und zusätzlich an der Heckklappe (14) oder direkt am Wagen (10) befestigten Abdeckkappen (31,31′) abgedeckt sind.

## Claims

1. Motor vehicle (10), particularly funeral vehicle, having an extended load space (11), the rearward opening (12) of which is closable by a pivotable tailgate (14) urged against a sealing strip (13) of the load space opening (12) and the floor (15) of which rests on a rear cross-piece (17) forming a component of the bodywork (16), characterised in that a substantially identical additional cross-piece (19) is secured at the same level to the original cross-piece (17) with a spacing (18) therefrom, said additional cross-piece including an auxiliary floor (20) with horizontal sealing strips (21), and in that the tailgate (14) is extended on the pivot hinge side and is provided on the inside with sealing projections (22) extending forwards to the original sealing strips (13) of the load space opening (12).

2. Vehicle according to claim 1, characterised in that the additional cross-piece (19) is provided with a plurality of spacer retainers (23) which are releasably secured to the original crosspiece (17).

3. Vehicle according to claim 1 or 2, characterised in that the auxiliary floor (20) has a floor extension sheet (24) which is arranged above the original cross-piece (17) to extend up to a floor member (25) which is associated with the additional cross-piece (19) and which is separated from the load space floor (15).

4. Vehicle according to claim 3, characterised in that the auxiliary floor (20) has respective floor plates (26) on each side of the separate floor member (25) and the associated horizontal sealing strips (21′).

5. Vehicle according to one or more of claims 1 to 4, characterised in that the original bumper (27) is secured to the additional cross-piece (19) and with side panels (27′) extending at the sides towards the front of the vehicle being secured to the bodywork (16), and in that bumper extensions (28) are secured on both sides to the bodywork (16) and/or to the bumper (27).

6. Vehicle according to one or more of claims 1 to 5, characterised in that the tailgate (14) has side walls (29) projecting forwardly at the sides and as an extension of the roof, said side walls screening the sealing projections (22) at the sides and lying flush with side panels (16′) of the bodywork (16).

7. Vehicle according to one or more of claims 1 to 6, with tail light units provided on both sides at the rear of the vehicle, characterised in that the tailgate (14) leaves the tail light units (30) unaffected.

8. Vehicle according to one or more of claims 1 to 6, with tail light units provided on both sides at the rear of the vehicle, characterised in that tail light units (30′) are built into the tailgate (14), and in that the original tail light units (30) are replaced by rear lights which do not radiate to the side or are covered by the tailgate (14) and additionally by screening caps (31, 31′) which are secured to the tailgate (14) or directly to the vehicle (10).

## Revendications

1. Véhicule (10), plus particulièrement fourgon mortuaire, comportant un coffre de chargement prolongé (11) dont l'ouverture arrière (12) est fermée par un hayon (14) se rabattant vers le bas et s'appuyant sur une baguette d'étanchéité (13) de l'ouverture du coffre de chargement (12), et dont le plancher (15) renose sur une entretoise transversale arrière (17) faisant partie de la carrosserie (16), **caractérisé en ce qu**'à une distance (18) de l'entretoise transversale d'origine (17), une entretoise transversale supplémentaire (19), pour l'essentiel identique, est fixée au même niveau, laquelle comporte un plancher complémentaire (20) avec des baguettes d'étanc.héité horizontales (21), et en ce que le hayon arrière (14) est prolongé du côté de l'articulation et équipé à l'intérieur de profils d'étanchéité feuillurés (22) avançant jusqu'à la baguette d'étanchéité d'origine (13) de l'ouverture du coffre de chargement (12).

2. Véhicule selon la revendication 1, **caractérisé en ce que** l'entretoise transversale supplémentaire (19) est équipée de plusieurs écarteurs (23) qui sont fixés de manière amovinle sur l'entretoise transversale d'origine (17).

3. Véhicule selon la revendication 1 ou 2, **caractérisé en ce que** le plancher complémentaire (20) comporte une tôle de prolongation de plancher (24), laquelle est montée au-dessus de l'entretoise transversale d'origine (17) jusqu'à un élément de plancher (25) dissocié du plancher de chargement (15) et associé à l'entretoise transversale supplémentaire (19).

4. Véhicule selon la revendication 3, **caractérisé en ce que** le plancher complémentaire (20) comporte une tôle de plancher (26) de chaque côté de l'élément de plancher (25) dissocié et des baguettes d'étanchéité horizontales (21′) qui lui sont associées.

5. Véhicule selon l'une ou plusieurs des revendications 1 à 4, **caractérisé en ce que** le pare-chocs d'origine (27) est fixé à l'entretoise transversale supplémentaire (19) et à la carrosserie (16) au moyen d'éléments latéraux (27′) avançant vers l'avant du véhicule, et en ce que des rallonges de pare-chocs (28) sont fixées de part et d'autre de la carrosserie (16) et/ou du pare-chocs (27).

6. Véhicule selon l'une ou plusieurs des revendications 1 à 5, **caractérisé en ce que** le hayon arrière (14) comporte des joues latérales (29) avançant sur les côtés et en prolongation du toit, lesquelles recouvrent latéralement les profils d'étanchéité feuillurés (22) et épousent les côtés (16′) de la carrosserie (16).

7. Véhicule selon l'une ou plusieurs des revendications 1 à 6, comportant des feux arrière de chaque côté de la partie arrière, **caractérisé en ce que** le hayon arrière (14) est conçu de manière à ce que les feux arrière (30) restent dégagés.

8. Véhicule selon l'une ou plusieurs des revendications 1 à 6, comportant des feux arrière de chaque côté de la partie arrière, **caractérisé en ce que** des feux arrière (30') sont intégrés au hayon arrière (14), et en ce que les feux arrière d'origine (30) sont remplacés par des feux arrière ne diffusant pas de lumière sur les côtés ou recouverts par le hayon arrière (14) et par des caches supplémentaires (31, 31′) fixés au hayon arrière (14) ou directement au véhicule (10).
